Europäisches Patentamt

European Patent Office

Office européen des brevets

(19)

(11) Numéro de publication : **0 388 247 B1**

(12) **FASCICULE DE BREVET EUROPEEN**

(45) Date de publication du fascicule du brevet :
**26.08.92 Bulletin 92/35**

(51) Int. Cl.$^5$ : **G01N 19/04**

(21) Numéro de dépôt : **90400413.2**

(22) Date de dépôt : **14.02.90**

(54) **Procédé de détermination de l'énergie de pelage en T d'une tôle sandwich.**

(30) Priorité : **16.03.89 FR 8903471**

(43) Date de publication de la demande :
**19.09.90 Bulletin 90/38**

(45) Mention de la délivrance du brevet :
**26.08.92 Bulletin 92/35**

(84) Etats contractants désignés :
**AT BE CH DE DK ES FR GB GR IT LI LU NL SE**

(56) Documents cités :
**FR-A- 1 115 835**
**ADHESIVE JOINTS, ed. K.L. Mittal, 1984,**
**pages 419-432, Plenum Press; T. IGARASHI:**
**"Feel-strenght and energy dissipation"**
**SOVIET INVENTIONS ILLUSTRATED, semaine**
**44, 14 décembre 1983, section S03, résumé no.**
**807174/44, Derwent Publications Ltd,Londres,**
**GB; & SU-A-989399**

(73) Titulaire : **UGINE S.A.**
**La Défense 9, 4 Place de la Pyramide**
**F-92800 Puteaux (FR)**

(72) Inventeur : **Mantel, Marc**
**31, rue F. Chautemps**
**F-73200 Albertville (FR)**
Inventeur : **Descaves, Frédéric**
**Chemin du Paradis Immeuble "l'Hermitage"**
**F-73200 Albertville (FR)**

(74) Mandataire : **Moncheny, Michel et al**
**c/o Cabinet Lavoix 2 Place d'Estienne d'Orves**
**F-75441 Paris Cedex 09 (FR)**

## Description

La présente invention concerne un procédé de détermination de l'énergie de pelage en T d'une tôle sandwich.

On connait déjà dans l'état de la technique, et notamment par le document "Peel strength and Energy Dissipation" de M. T. IGARASHI, publié dans " Adhesive joints", p. 419, K.L Mittal Plenum Press 1984, une analyse des différentes énergies mises en jeu lors du pelage d'une telle tôle. On connait par le document FR-A-1 115 835 un procédé de mesure de la force d'arrachement de deux couches de tissus auxquelles une vitesse de séparation prédeterminée est imposée.

Dans cette analyse, on considère que les feuilles extérieures de la tôle sandwich conservent une déformation rémanente après pelage. Cette déformation rémanente pose un certain nombre de problèmes lors de la détermination avec précision de l'énergie de pelage, en particulier lorsque l'on désire mettre en oeuvre un procédé industriel de détermination de cette énergie en vue de la comparaison des caractéristiques de différentes tôles sandwich.

Or,la Demanderesse a constaté que dans certaines conditions opératoires, les feuilles extérieures de la tôle sandwich ne conservent pas de déformation rémanente après pelage, de sorte qu'il est possible de faciliter la mise en oeuvre d'un procédé industriel de détermination de cette énergie.

Le but de l'invention est donc de résoudre les problèmes évoqués ci-dessus en proposant un procédé de détermination de l'énergie de pelage en T d'une tôle sandwich, qui soit simple, fiable et qui permette de déterminer avec une très bonne précision cette énergie de pelage.

A cet effet, l'invention a pour objet un procédé de détermination de l'énergie (G) de pelage en T d'une tôle sandwich, présentant deux feuilles de matériau extérieures, caractérisé en ce qu'il comporte les étapes suivantes :

a) on introduit la tôle dans une machine de traction pour peler les deux feuilles de matériau extérieures,

b) on impose aux extrémités des feuilles une vitesse (v) de déplacement relatif déterminée,

c) on mesure la force de pelage (F) nécessaire pour obtenir cette vitesse de déplacement, lorsque cette force est stabilisée,

d) on mesure la courbure maximale ($\theta$ max) du coude au niveau de la déformation de l'une des feuilles extérieures,

e) on calcule un moment fléchissant M ($\theta$ max) à partir de la formule :

$$M\ (\theta_{max}) = 2\ l\left[\left(\frac{E0,2.\varepsilon_e^2}{3} - \frac{K(\varepsilon_e)^{2+n}}{2+n}\right) \cdot \frac{1}{\theta_{max}^2} + \frac{K}{2+n}\left(\frac{H}{2}\right)^{2+n} \cdot \theta_{max}^n\right]$$

dans laquelle :
- l représente la largeur de la feuille,
- E0,2 la limite élastique conventionnelle à 0,2% d'allongement du matériau considéré,
- $\varepsilon$ e la déformation élastique du matériau (0,2%),
- K et n les constantes de la loi de plasticité caractéristique de la feuille de matériau utilisée,
- $\theta$ max la courbure maximale mesurée, et
- H l'épaisseur d'une feuille de matériau utilisée.

f) on calcule une valeur de courbure intermédiaire $\theta'$ a partir de la formule :

$$\theta' = 6\ \frac{M\ (\theta\ max)\ \theta e}{E0,2\ H^2}$$

dans laquelle $\theta$ e représente la courbure élastique de la feuille de matériau utilisée et donnée par la formule :

$$\theta e = \frac{\varepsilon e}{H/2}$$

et,

g) on calcule l'énergie de pelage G, en considérant que les énergies de pliage et de dépliage de la feuille sont égales, d'après la formule :

$$G = 2\left[\frac{F}{l} - \left(-\frac{1}{6}\frac{E0.2\,H^2}{\theta_e}\cdot\left(\theta'^2 - \theta_e^2\right) + 4\left(\frac{E0.2\cdot\varepsilon_e^2}{3} - \frac{K\varepsilon_e^{2+n}}{2+n}\right)\cdot\left(\frac{1}{\theta_e} - \frac{1}{\theta_{max}}\right) + \frac{4K}{2+n}\left(\frac{H}{2}\right)^{2+n}\cdot\left(\theta_{max}^{1+n} - \theta_e^{1+n}\right)\right)\right]$$

L'invention sera mieux comprise à l'aide de la description qui va suivre, donnée uniquement à titre d'exemple et faite en se référant aux dessins annexés, sur lesquels :

– la Fig.1 représente un cycle de déformation d'une feuille;

– la Fig.2 représente une machine de traction pour peler deux feuilles de matériau extérieures d'une tôle sandwich, entrant dans la mise en oeuvre d'une phase du procédé selon l'invention; et

– la Fig.3 représente une courbe de traction rationnelle.

Dans l'étude des tôles multi-matériaux (métal/polymère) également appelées tôles sandwich, dont les substrats encore appelées feuilles extérieures, sont rigides et subissent une déformation plastique, il est nécessaire de soustraire à l'énergie de pelage mesurée, l'énergie dépensée pour la déformation en flexion des feuilles extérieures.

A partir d'une loi de comportement élastoplastique, un calcul de l'énergie de déformation des feuilles permet de déduire l'énergie de pelage dépensée pour rompre les liaisons d'adhésion (métal/polymère) ou de cohésion (polymère).

Cette énergie de déformation dépend de la courbure des feuilles et par conséquent, du travail des forces d'adhésion.

Ces calculs nécessitent également la connaissance de la géométrie des feuilles et des caractéristiques rhéologiques des matériaux utilisés, ainsi que la mesure de la courbure maximale $\theta$ max des feuilles pendant un essai de pelage.

A partir d'essais à différentes vitesses et d'une loi de dissipation de l'énergie, il est possible de caractériser et de comparer l'adhésion ou la cohésion de l'interface métal/polymère.

Les pelages à 180° ou en T, par exemple dans une machine de traction, sont plus particulièrement utilisés pour des matériaux flexibles possédant des dimensions et des propriétés physiques leur permettant une flexion susceptible d'atteindre un angle de 180° ou 90° sans qu'aucune fissure n'apparaisse dans les feuilles extérieures.

La résistance au pelage exprimée en N/m ou en $j/m^2$ n'a pas la dimension d'une contrainte car c'est le rapport d'une force à une dimension (largeur de la tôle). Ceci vient du fait de la méconnaissance du champ contrainte/déformation dans la zone du front de pelage.

La force retenue pour le calcul est la force nécessaire pour propager la rupture le long de la tôle, cette force étant inférieure à la force nécessaire pour amorcer cette rupture et est donc mesurée lorsque la force appliquée par la machine de traction est stabilisée. Le résultat de la procédure de mesure décrite précédemment est l'obtention d'une force de pelage brute ne distinguant pas la force d'adhésion ou de cohésion en pelage, de la force nécessaire pour plier les feuilles en forme de T.

L'un des résultats du procédé selon l'invention est donc de permettre une comparaison de l'adhésion d'un polymère vis à vis de types d'acier utilisés par la fabrication des feuilles extérieures, présentant des caractéristiques mécaniques et de surface différentes.

De plus, il est intéressant de pouvoir extraire une valeur d'adhésion à partir du pelage de multi-matériaux d'épaisseurs variables.

La force de pelage équilibre :

– les forces résultant de la rupture adhésive ou cohésive de l'interface,

– la double flexion des deux feuilles extérieures entrant dans la constitution de la tôle sandwich, et

– la flexion du polymère.

Le travail fourni par une machine pour peler une tôle multi-matériaux sur une longueur L/2 est donc:

$$F.L = Wo + W' \quad (1)$$

formule dans laquelle :

– F.L représente l'énergie fournie par la machine,

– Wo, l'énergie nécessaire pour rompre l'interface, et

– W', l'énergie dépensée pour la déformation des feuilles extérieures et du polymère de la tôle.

Par ailleurs,

$$Wo\ (j) = G\ (j/m^2) \times l \times L/2(m) \quad (2)$$

Dans cette formule :

– G représente le taux de restitution d'énergie ou énergie de pelage à déterminer,

– l, la largeur de la feuille , et

– L, la longueur de l'interface pelée.

L'énergie dépensée pour la déformation des feuilles et du polymère est quant à elle donnée par la formule :

$$W' \ (J) \ = \ W'1 \ + \ 2 \, W'z \quad (3)$$

dans laquelle

– W'1 est l'énergie de déformation du polymère, et

– W'z, l'énergie de déformation élastoplastique d'une feuille.

Dans ce cas, W'1 peut être négligé au vu du rapport des épaisseurs et des modules polymère/matériau des feuilles.

L'énergie de déformation élastoplastique d'une feuille est égale à :

$$W'z \ (J) \ = \ L/2 \ x \ W''z \ (J/m) \quad (4)$$

dans laquelle :

– W'z est l'énergie dépensée par unité de longueur de feuille d'épaisseur H et de largeur l.

Cette énergie W''z peut être calculée à partir du moment fléchissant M et de la courbure $\theta$ de la feuille suivant la relation :

$$W''z \ (J/m) \ = \ \oint M \ x \ d \ \theta \quad (5)$$

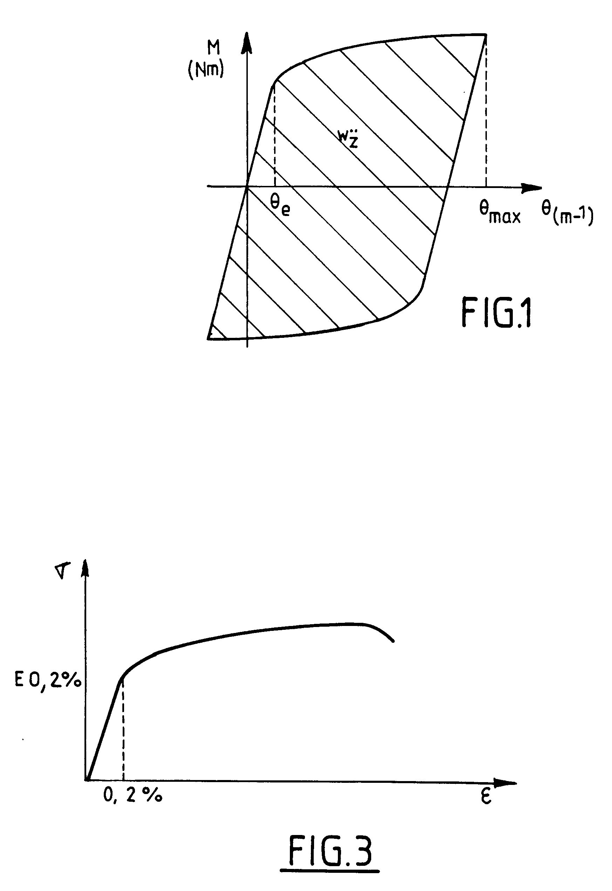

L'intégration est faite sur un cycle de déformation donné Fig.1 et la courbure négative des tôles précédant le retour à une courbure nulle est constatée dans des conditions opératoires décrites plus en détail par la suite.

Sur ce cycle

$$\theta e \ = \ \varepsilon e \ / \ (H/2) \quad (6)$$

et représente la courbure élastique de la feuille de matériau utilisée. $\varepsilon e$ est la déformation élastique du matériau utilisé et H est l'épaisseur d'une feuille.

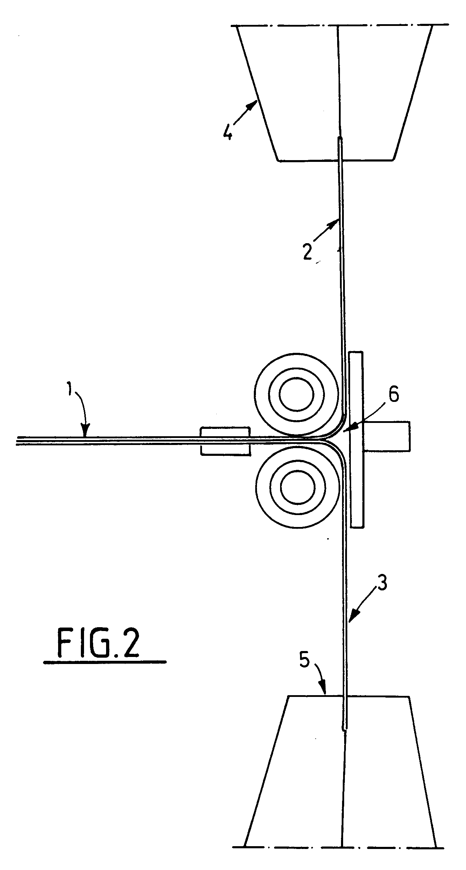

La courbure maximale $\theta$ max de la feuille lors du cycle de déformation, est mesurée par exemple par comparaison à des abaques de référence après passage dans une machine de traction comme cela est illustré sur la Fig.2.

Sur cette Fig.2, une tôle sandwich 1 est introduite dans une machine de traction et les extrémités des feuilles extérieures 2 et 3 de cette tôle sont engagées dans des mors respectivement 4 et 5 de cette machine. Une vitesse v de déplacement relatif déterminée est imposée aux extrémités des feuilles et une fois cette vitesse atteinte, il est alors possible de procéder à la mesure de la force de pelage F nécessaire pour obtenir cette vitesse de déplacement, lorsque la force est stabilisée, comme cela a été expliqué précédemment. La courbure $\theta$ max par exemple de la feuille 2 est ensuite mesurée par exemple par comparaison d'une diapositive prise au niveau du coude 6 de cette feuille à des abaques de référence.

Bien entendu, d'autres modes de mesure de cette courbure maximale peuvent être utilisés.

Chaque feuille travaillant en flexion, il est supposé qu'il existe un champ de contraintes en traction-compression de part et d'autre de la fibre neutre de la poutre représentative de chaque feuille.

Par ailleurs, on suppose également que pour les faibles déformations envisagées, le comportement de l'acier est symétrique en traction et en compression.

M est le moment total dans une section plane de la feuille, considérée comme une poutre, de section S = H x l, calculé à partir d'une loi de comportement élastoplastique $\tau = f \ (\varepsilon)$

Ce moment M est donné par la formule :

$$M = \int_{S} \tau (y) \ y \ dS \ = \ l \int_{-H/2}^{+H/2} \tau (y) \ y \ dy \quad (7)$$

On peut alors déduire de la courbe de traction rationnelle représentée Fig.3 une loi de comportement qui nécessite la connnaissance des constantes K et n de la loi de plasticité pour le matériau envisagé, cette loi de plasticité étant :

$$\tau \ = \ K \, \varepsilon^{n}.$$

A partir de cette loi de comportement donnée, on obtient donc les expressions de $M = f \ (\theta)$ , puis de $W''z = g \ (\theta \ max)$, $\theta$ max étant mesurée comme décrit précédemment.

En reportant dans l' équation (1) les expressions de (2) et de (3) , il est alors possible d'obtenir le taux de restitution d'énergie ou énergie de pelage qui est égal à :

$$G \ = \ 2 \ (F/l - W''z/l). \quad (8)$$

dans laquelle

– F est la force exercée par la machine en N/m, et

4

– W″z l'énergie de déformation en J/m$^2$.

A partir des considérations posées précédemment, W″z est déterminée par la formule :

$$W''z = 1\left[-\frac{1}{6}\cdot\frac{E_{02}\cdot H^2}{\theta e}\left(\theta'^2 - \theta e^2\right) + 4\left(\frac{E_{02}\cdot \varepsilon_e^2}{3} - \frac{K\cdot \varepsilon_e^{2+n}}{2+n}\right)\cdot\right.$$
$$\left.\left(\frac{1}{\theta e} - \frac{1}{\theta max}\right) + \frac{4}{2+n}\frac{k}{2}\left(\frac{H}{2}\right)^{2+n}\cdot\left(\theta max^{1+n} - \theta e^{1+n}\right)\right] \qquad (9)$$

Dans celle-ci θ′ est donné par la formule:

$$\theta' = 6\frac{(M(\theta\, max)\,\theta e)}{E0,2\, H^2} \qquad (10)$$

Par ailleurs, M (θ max) est donné par la formule (11) :

$$M(\theta\, max) = 21\left[\left(\frac{E0.2\cdot\varepsilon_e^2}{3} - \frac{K1\cdot(\varepsilon_e)^{2+n}}{2+n}\right)\cdot\frac{1}{\theta_{max}^2} + \frac{K}{2+n}\left(\frac{H}{2}\right)^{2+n}\cdot\theta_{max}^n\right]$$

Dans ces différentes formules, I représente la largeur de la tôle, E0,2 la limite élastique conventionnelle à 0,2% d'allongement du matériau considéré, H l'épaisseur d'une feuille de la tôle, εe la courbure élastique et K et n les constantes de la loi de plasticité caractéristique de la feuille de matériau utilisée.

Ainsi, après avoir mesuré la courbure maximale θ max, on calcule le moment M (θ max) par la formule (11) , puis on calcule la valeur intermédiaire θ′ par la formule (10) dans laquelle θe est calculée d'après la formule (6). Après ces différents calculs, l'énergie de pelage G est déterminée à partir de la formule (8) dans laquelle on introduit la formule (9), ce qui donne, en considérant les énergies de pliage et de dépliage de la feuille égales :

$$G = 2\left[\frac{F}{1} - \left(-\frac{1}{6}\frac{E0.2\, H^2}{\theta e}\right)\cdot\left(\theta'^2 - \theta e^2\right) + 4\left(\frac{E0.2\cdot\varepsilon_e^2}{3} - \right.\right.$$
$$\left.\left.\frac{K\varepsilon_e^{2+n}}{2+n}\right)\cdot\left(\frac{1}{\theta e} - \frac{1}{\theta max}\right) + \frac{4K}{2+n}\left(\frac{H}{2}\right)^{2+n}\cdot\left(\theta_{max}^{1+n} - \theta e^{1+n}\right)\right)\right]$$

La force nécessaire pour séparer deux solides en contact, ou pour rompre un solide, ne dépend pas seulement des forces d'adhésion qui lient les deux solides ou des forces qui assurent la cohésion, mais également d'un grand nombre de paramètres tels que la géométrie de ceux-ci, la raideur de l'appareillage de mesure, la vitesse de séparation, les contraintes résiduelles et les propriétés rhéologiques des matériaux.

La rupture s'effectue par propagation d'une fissure adhésive ou cohésive. L'énergie Wda ou 2 γ dA nécessaire pour rompre les liaisons sur une aire dA provient de l'énergie mécanique G dA libérée au cours de la propagation. Le taux de restitution d'énergie G ou énergie de pelage dépend de la géométrie étudiée, des contraintes appliquées et des propriétés élastiques.

Cette fissure est en équilibre quand G = w ou G = 2 γ (critère de Griffith).

G - W représente une force généralisée qui fait avancer la fissure. Sous l'action d'une telle force constante, une fissure dans un solide élastique atteindrait la vitesse des ondes de Rayleigh. Les solides viscoélastiques dissipent de l'énergie lorsqu'ils sont soumis à un cycle de contrainte.

On peut donc s'attendre à ce que les pertes viscoélastiques au cours de la propagation de la fissure soient proportionnelles à w et fonction de la vitesse v. En utilisant le facteur de translation aT de William, Landel et Ferry (WLF) de l'équivalence temps-température, MM. Maugis et Barquins dans J.Phys. D Appli.Phys. 1978 - 11 , 1989 supposent l'expression de la force généralisée :

$$G - w = w\, f\,(aT.v)$$

Dans le cas des solides présentant également des caractéristiques de plasticité, un frottement statique est également à vaincre pour amorcer la fissure.

La force de pelage dépend nécessairement de la vitesse à laquelle est réalisée l'expérience. Pour un contrôle industriel comparatif de tôles sandwich, il est donc nécessaire d'imposer une vitesse v et une température de référence.

Pour minimiser les dispersions de résultats de pelage, il est possible, à partir d'essais à différentes vitesses et du calcul de G, d'obtenir après choix d'un type de fonction f et interpolation à vitesse nulle, une valeur w de l'adhésion ou de la cohésion de l'interface métal/polymère.

Afin de mettre en évidence le fait que l'énergie dépensée dans le pliage des feuilles représente une part non négligeable de l'énergie totale dépensée pour le pelage, différents essais ont été effectués par la Demanderesse.

L'énergie de déformation n'est pas explicitement une fonction de la vitesse.

Cependant, on vérifie que la flexion des feuilles est une fonction croissante de l'énergie nécessaire pour rompre les forces d'adhésion ou de cohésion dans la zone de la fracture. Cette énergie est elle-même une fonction croissante de la vitesse.

Le tracé des courbes du logarithme de G, en fonction du logarithme de la vitesse de pelage, log (G) = f(log(v)) montre une évolution linéaire et à partir d'essais à différentes vitesses et d'une loi de dissipation de l'énergie, il est possible de caractériser et de comparer l'adhésion ou la cohésion de l'interface métal/polymère.

Le procédé selon l'invention permet ainsi d'une part de simplifier la caractérisation et la comparaison de différentes tôles sandwich et d'autre part de déterminer avec une meilleure précision les caractéristiques de celles-ci dans la mesure où les feuilles extérieures de la tôle ne conservent pas de déformation rémanente, ce qui évite ainsi l'intégration d'imprécisions lors de cette détermination et donc une erreur de caractérisation de l'interface entre les feuilles extérieures et le polymère de la tôle.

## Revendications

1. Procédé de détermination de l'énergie (G) de pelage en T d'une tôle sandwich, présentant deux feuilles (2,3) de matériau extérieures, caractérisé en ce qu'il comporte les étapes suivantes :

a) on introduit la tôle (1) dans une machine de traction pour peler les deux feuilles (2,3) de matériau extérieures,

b) on impose aux extrémités des feuilles une vitesse (v) de déplacement relatif déterminée,

c) on mesure la force de pelage (F) nécessaire pour obtenir cette vitesse de déplacement, lorsque cette force est stabilisée,

d) on mesure la courbure maximale ($\theta$ max) du coude (6) au niveau de la déformation de l'une des feuilles extérieures,

e) on calcule un moment fléchissant M ($\theta$ max) à partir de la formule :

$$M\ (\theta\ max) = 2\ l\left[\left(\frac{E0.2.\varepsilon e^2}{3} - \frac{K(\varepsilon e)^{2+n}}{2+n}\right) \cdot \frac{1}{\theta_{max}^2} + \frac{K}{2+n}\left(\frac{H}{2}\right)^{2+n} \cdot \theta_{max}^n\right]$$

dans laquelle :
  – l représente la largeur de la feuille,
  – E0,2 la limite élastique conventionnelle à 0,2% d'allongement du matériau considéré,
  – $\varepsilon$e la déformation élastique du matériau (0,2%),
  – K et n les constantes de la loi de plasticité caractéristique de la feuille de matériau utilisée,
  – $\theta$ max la courbure maximale mesurée, et
  – H l'épaisseur d'une feuille de matériau utilisée,

f) on calcule une valeur de courbure intermédiaire $\theta'$ à partir de la formule :

$$\theta' = 6\ \frac{M\ (\theta\ max)\ \theta e}{E0,2\ H^2}$$

dans laquelle $\theta$ e représente la courbure élastique de la feuille de matériau utilisée et donnée par la formule :

$$\theta e = \frac{\varepsilon e}{H/2}$$

et,

g) on calcule l'énergie de pelage G en considérant que les énergies de pliage et de dépliage de la feuille sont égales, d'après la formule :

$$G = 2\left[\frac{F}{1} - \left(-\frac{1}{6}\frac{E0,2\ H^2}{\theta_e}\cdot\left(\theta'^2 - \theta e^2\right) + 4\left(\frac{E0,2.\varepsilon e^2}{3} - \frac{K\varepsilon e^{2+n}}{2+n}\right)\cdot\left(\frac{1}{\theta_e} - \frac{1}{\theta max}\right) + \frac{4K}{2+n}\left(\frac{H}{2}\right)^{2+n}\cdot\left(\theta_{max}^{1+n} - \theta e^{1+n}\right)\right)\right]$$

2. Procédé selon la revendication 1 , caractérisé en ce qu'on répète les étapes précédentes pour en tirer après calcul des logarithmes une courbe caractéristique : log(G) = f (log(v)), de manière à caractériser l'adhérence des différents constituants de la tôle.

3. Procédé selon la revendication 1 ou 2, caractérisé en ce qu'on mesure la courbure maximale ($\theta$ max) de la feuille en comparant une image du coude de celle-ci à des abaques de référence.

**Patentansprüche**

1. Verfahren zur Bestimmung der Abziehenergie (G) beim Abziehen im T eines mehrlagigen Bleches, welches zwei äußere Materialblätter (2, 3) aufweist, dadurch gekennzeichnet, daß es folgende Verfahrensschritte umfaßt:

a) das Blech (1) wird in eine Zugmaschine zum Abziehen der beiden äußeren Materialblätter (2, 3) voneinander eingeführt,

b) den beiden Enden der Blätter wird eine bestimmte Relativversetzungsgeschwindigkeit (v) aufgezwungen,

c) die Abziehkraft (F), die für eine Erzielung dieser Versetzungsgeschwindigkeit erforderlich ist, wird gemessen, wenn sich diese Kraft stabilisiert hat,

d) die Maximalkrümmung ($\theta$ max) der Biegung (6) wird an der Verformung eines der Außenblätter gemessen,

e) ein Biegemoment M($\theta$ max) wird anhand folgender Formel berechnet:

$$M(\theta max) = 2\,1\left[\left(\frac{E0,2.\varepsilon e^2}{3} - \frac{K(\varepsilon e)^{2+n}}{2+n}\right)\cdot\frac{1}{\theta_{max}^2} + \frac{K}{2+n}\left(\frac{H}{2}\right)^{2+n}\cdot\theta_{max}^n\right]$$

wobei

l die Breite des Blattes,

E0,2 die herkömmliche Elastizitätsgrenze bei 0,2% Streckung des betrachteten Materials,

$\varepsilon e$ die elastische Verformung des Materials (0,2%),

K und n die Konstanten des für das verwendete Materialblatt charakteristischen Plastizitätsverlaufs,

$\theta$ max die gemessene Maximalkrümmung, und

H die Dicke eines verwendeten Materialblatts ist,

f) ein Zwischenkrümmungswert $\theta$ wird anhand der Formel

$$\theta' = 6\frac{M(\theta max)\,\theta e}{E0,2\ H^2}$$

berechnet, wobei $\theta e$ die elastische Biegung des verwendeten Materialblattes darstellt und durch folgende Formel gegeben ist:

$$\theta e = \frac{\varepsilon e}{H/2}$$

und

g) die Abziehenergie G wird unter Berücksichtigung, daß die Biege- und Entbiegeenergien des Blattes gleich sind, nach folgender Formel berechnet:

$$G = 2\left[\frac{F}{l} - \left(-\frac{1}{6} \frac{E0.2\,H^2}{\theta e}\cdot\left(\theta'^2 - \theta e^2\right) + 4\left(\frac{E0.2\,\varepsilon e^2}{3} - \frac{K\varepsilon e^{2+n}}{2+n}\right)\cdot\left(\frac{1}{\theta e} - \frac{1}{\theta max}\right) + \frac{4K}{2+n}\left(\frac{H}{2}\right)^{2+n}\cdot\left(\theta max^{1+n} - \theta e^{1+n}\right)\right)\right]$$

2. Verfahren nach Anspruch 1, dadurch gekennzeichnet, daß man die vorstehenden Verfahrensschritte wiederholt, um daraus nach Berechnung der Logarithmen eine Kennkurve: log(G) = f(log(v)) zu entnehmen, so daß damit die Haftung verschiedener Bestandteile des Bleches charakterisiert wird.

3. Verfahren nach Anspruch 1 oder 2, dadurch gekennzeichnet, daß die Maximalkrümmung ($\theta$ max) des Blattes gemessen wird, indem man ein Bild der Krümmung desselben mit Referenzdiagrammen vergleicht.

**Claims**

1. Method for determining the energy (G) of peeling, into the form of a T, a sheet metal sandwich, having two sheets (2, 3) of outer material, characterised in that it comprises the following steps:

   a) the sheet metal (1) is introduced into a traction machine in order to peel the two sheets (2, 3) of outer material;

   b) a specific relative displacement velocity (v) is applied to the ends of the sheets;

   c) the peeling force (F) necessary to obtain this displacement velocity when this force is stabilised is measured;

   d) the maximum curvature ($\theta$ max) of the bend (6) at the deformation of one of the outer sheets is measured;

   e) a bending moment M ($\theta$ max) is calculated on the basis of the formula:

$$M(\theta max) = 2\,l\left[\left(\frac{E0.2\,\varepsilon e^2}{3} - \frac{K(\varepsilon e)^{2+n}}{2+n}\right)\cdot\frac{1}{\theta^2 max} + \frac{K}{2+n}\left(\frac{H}{2}\right)^{2+n}\cdot\theta max^n\right]$$

wherein:

   − 1 represents the width of the sheet;

   − E0.2 is the conventional yield limit at 0.2% elongation of the material concerned;

   − $\varepsilon$ is the elastic deformation of the material (0.2%);

   − K and n are the constants of the law of plasticity characteristic for the sheet of material used;

   − $\theta$ max is the maximum curvature measured; and

   − H is the thickness of a sheet of material used;

f) an intermediate curvature value $\theta$ is calculated on the basis of the formula:

$$\theta' = 6\,\frac{M(\theta max)\,\theta e}{E0.2\,H^2}$$

in which $\theta e$ represents the elastic curvature of the sheet of material used and given by the formula:

$$\theta e = \frac{\varepsilon e}{H/2}$$

and

g) the peeling energy G is calculated on the basis of the fact that the folding and unfolding forces of the sheet are equal, according to the formula:

$$G = 2\left[\frac{F}{1} - \left(-\frac{1}{6}\frac{E0,2}{\theta_e}H^2 \cdot \left(\theta'^2 - \theta_e^2\right) + 4\left(\frac{E0,2\,\varepsilon_e^2}{3} - \frac{K\,\varepsilon_e^{2+n}}{2+n}\right)\cdot\left(\frac{1}{\theta_e} - \frac{1}{\theta_{max}}\right) + \frac{4K}{2+n}\left(\frac{H}{2}\right)^{2+n}\cdot\left(\theta_{max}^{1+n} - \theta_e^{1+n}\right)\right)\right]$$

2. Method according to claim 1, characterised in that the preceding steps are repeated such that when the logarithms have been calculated, a characteristic curve is obtained: $\log(G) = f(\log(v))$ in such a way as to characterise the adhesion of the various components of the sheet metal.

3. Method according to claim 1 or 2, characterised in that the maximum curvature ($\theta$ max) of the sheet is measured by comparing an image of the bend of the latter with reference charts.

M
(Nm)

W$\ddot{z}$

$\theta_e$     $\theta_{max}$   $\theta_{(m-1)}$

## FIG.1

$\nabla$

E 0,2%

0, 2 %            $\varepsilon$

## FIG.3

FIG.2